# EUROPÄISCHE PATENTSCHRIFT

(11) **EP 3 772 645 B1**
(45) Veröffentlichungstag und Bekanntmachung des Hinweises auf die Patenterteilung: **08.02.2023**
(21) Anmeldenummer: 19000370.7
(22) Anmeldetag: 09.08.2019
(51) Int. Cl.: G01N 21/64

(54) **VERFAHREN UND VORRICHTUNG ZUR ERFASSUNG VON SEHR GERINGER FLUORESZENZ**
METHOD AND DEVICE FOR DETECTING VERY LOW FLUORESCENCE
PROCÉDÉ ET DISPOSITIF DE DÉTECTION D'UNE TRÈS FAIBLE FLUORESCENCE

(43) Veröffentlichungstag der Anmeldung: 10.02.2021
(73) Patentinhaber: mfd Diagnostics GmbH, 55234 Wendelsheim (DE)
(72) Erfinder: Lecher, Bernd, 55128 Mainz (DE); Kempe, Christian, 14469 Potsdam (DE); Querengässer, Jochen, 12557 Berlin (DE)
(74) Vertreter: Kayser, Christoph

(56) Entgegenhaltungen:
- WO-A1-2018/167685
- DE-A1- 4 420 572
- DE-A1-102005 021 205
- US-A1- 2011 144 473
- US-A1- 2012 041 315
- US-A1- 2012 043 477
- US-B1- 6 371 615

## Beschreibung

Die vorliegende Erfindung betrifft ein Verfahren zur Erfassung einer optischen Fluoreszenzstrahlung, die von einem zu untersuchenden Objekt als optisches Messsignal mit einer Intensität abgestrahlt wird, die einer Autofluoreszenz des Objekts entspricht, wobei ein optischer Anregungsimpuls durch einen Kurzpulslaser erzeugt wird und das optische Messignal elektrisch verarbeitet wird, und eine Vorrichtung zur Erfassung einer optischen Fluoreszenzstrahlung, die von einem zu untersuchenden Objekt als optisches Messsignal mit einer Intensität abgestrahlt wird, die einer Autofluoreszenz des Objekts entspricht, mit einem Kurzpulslaser, der einen optischen Anregungsimpuls erzeugt und mit einer Einrichtung zum Empfang eines optischen Messignals, wobei die Einrichtung zum Empfang des optischen Messignals einen Wandler zur Umwandlung des empfangenen optischen Messignals in ein elektrisches Signal und einen Signalverstärker umfasst.

Die Analyse von chemischen Stoffzuständen bzw. von chemischen und physikalischen Prozessen aufgrund der Fluoreszenz einzelner Bestandteile erfolgt grundsätzlich nach dem folgenden Schema:
1. Einstrahlung von Licht in das zu untersuchende Objekt
   - Erzeugung des Lichts durch eine Lichtquelle
   - ggf. Strahlformung
   - ggf. räumliche und spektrale Filterung
   - Weiterleitung des Lichts in oder auf das zu untersuchende Objekt
2. Analyse des vom Objekt ausgestrahlten Lichts
   - Ableitung des vom Objekt ausgestrahlten Lichts
   - spektrale Filterung
   - Weiterleitung des gefilterten Lichts auf ein photoaktives Element
   - Umwandlung des Lichts in ein elektrisches Signal
   - ggf. Verstärkung und Integration des elektrischen Signals
   - ggf. weitere elektronische Verfahren zur Analyse des Signals Wegen der sehr kurzen Lebensdauer der Fluoreszenz (Piko- bis Nanosekunden) beschränkt sich die Signalauswertung auf eine entsprechend kurze Zeit nach der Anregung. Dadurch hat man die Möglichkeit, nicht nur Stoffzustände zu analysieren, sondern auch dynamische Prozesse zu untersuchen.

Die Erfassung optischer Signale biologischen Ursprungs, insbesondere solcher, die direkt aus dem vitalen Organismus heraus aufgezeichnet werden, ist allerdings immer dadurch begrenzt, dass die Wechselwirkung des Lichts mit dem Gewebe, das den Ort der Messung umgibt, das ursprüngliche Signal verändert oder auslöscht. Ursache dafür sind die Absorption und die Streuung des Lichts im Gewebe. Daher sind optische Analysen entweder nur an der Gewebeoberfläche, an dünnen Gewebeschnitten oder in einem Spektralbereich möglich, bei dem das Gewebe eine hohe Transmission des Lichts zeigt.

Ein bewährtes Verfahren der fluoreszenztechnischen Analyse von organischem Gewebe ist die Fluoreszenzmikroskopie.

Im Nahinfraroten Spektralbereich (NIR) zeigen biologische Gewebe und Materialien eine relativ hohe Transparenz. Dieser Bereich wird daher oft als "Optisches Fenster" im Gewebe bezeichnet. In diesem Bereich ist die Eindringtiefe von Licht daher vergleichsweise hoch. Dementsprechend kann hier eine spektrale Analyse der Veränderungen im Gewebe stattfinden. Allerdings finden sich nur sehr wenige Biomoleküle, die eine Autofluoreszenz im NIR zeigen.

Ein technischer Ansatz, der sich die NIR-Transparenz von Gewebe zunutze macht, um damit Autofluoreszenzen anzuregen, ist die Mehrphotonen-Spektroskopie. Hierzu wird ein intensiver NIR-Laserstrahl in das zu analysierende Gewebe fokussiert. Im Fokus des Laserstrahls entsteht eine so hohe optische Energiedichte, dass Mehrphotonenprozesse (z.B. Zwei-Photonen-Absorption) ablaufen, die nicht-linear von der Energiedichte des Lichts abhängen.

Durch den Mehrphotonenprozess können auch Moleküle zur Fluoreszenz angeregt werden, deren Absorptionsbanden im unteren optischen Wellenlängenbereich liegen.

Die Mehrphotonen-Technik hat zwei entscheidende Nachteile: Zum einen führt die sehr hohe optische Energiedichte zu einem starken Ausbleichen des Gewebes. Die fluoreszierenden Moleküle werden dabei verändert oder zerstört. Eine korrekte quantitative Analyse von Fluorophor-Änderungen ist daher durch diese Techniken nicht zu gewährleisten.

Ein Verfahren und eine Vorrichtung dieses Standes der Technik sind aus DE 44 20 572 A1, US 6,371,615B1, US 2011/144472 A1, DE 10 2005 021205 A1 und WO 2018/167685 A1 bekannt.

Aus DE 44 20 572 A1 ist ein Verfahren und eine Anordnung zur Messung von Fluoreszenzlicht bekannt, bei dem als zentrales Verfahren die sog. "zeitaufgelöste Messung der Fluoreszenz" verwendet, die das Standard-Verfahren für hochaufgelöste Messungen von schwachen Fluoreszenzsignalen ist. Verfahren mit dem gleichen Grundprinzip sind auch die "zeitaufgelöste Fluoreszenzspektroskopie" und die "zeitaufgelöste Einzelphotonenzählung" (TCSPC).

Das Grundprinzip dieser Verfahren ist seit den 1960iger Jahren bekannt und wird u.a. auch in US 6,371,615B1 und US 2011/144472 A1 angewandt. Kernpunkt dabei ist, dass der Fotodetektor (hier der Photomultiplier) von dem erzeugten Fluoreszenzimpuls nur einen ganz bestimmten, sehr schmalen Zeitbereich misst, der durch eine ganz spezielle elektronische Schaltung (hier die sog. "Tor-Schaltung") definiert wird. Diese Schaltung ermöglicht die Messung exakt desselben Zeitintervalls innerhalb eines jeden einzelnen Fluoreszenzimpulses. Die Einzelmessungen sehr vieler Impulse werden dann integriert. Das führt zu einem sehr großen Signal-Rausch-Verhältnis führt. Die entsprechende Elektronik, die eine solche zeitaufgelöste Fluoreszenzmessung im Subnanosekundenbereich ermöglicht, ist allerdings technisch sehr aufwändig.

DE 10 2005 021205 A1 ist offenbart eine Auswertung des gesamten Fluoreszenzimpulses und in US 2011/144472 A1 ist ein Verfahren zur Messung der Autofluoreszenz beschrieben, wobei die Messung mittels Waveguide-Spektroskopie, einer von dem vorliegenden Verfahren völlig abweichenden Technik.

Die Aufgabe der vorliegenden Erfindung ist daher, ein Verfahren und eine Vorrichtung der eingangs genannten Gattung derart weiterzubilden, dass Fluoreszenzsignale sehr geringer Intensität, die vorwiegend, aber nicht ausschließlich biologischen Ursprungs sind, technisch einfacher erfasst und verarbeitet werden können.

Erfindungsgemäß wird die Aufgabe für das Verfahren dadurch gelöst, dass das elektrische Signal im Schritt des elektrischen Verarbeitens zeitlich gedehnt wird. Für die Vorrichtung wird die Aufgabe erfindungsgemäß dadurch gelöst, dass der Wandler das aus dem optischen Messsignal erzeugte elektrische Signal zeitlich dehnt und ein Mikrocontroller (11) das im Signalverstärker (9) verstärkte elektrische und zeitlich gedehnte Signal in einem zeitlich konstanten Abstand nach dem Empfang des optischen Messignals abgreift.

Der wichtigste Vorteil gegenüber der linearen Fluoreszenzspektroskopie ist das höhere Signal-Rausch-Verhältnis durch Verwendung sehr kurzer, intensiver Anregungsimpulse in Verbindung mit der Signalverstärkung, z.B. des Photomultipliers. Dadurch ist es möglich, Fluoreszenzsignale sehr geringer Intensität (z.B. Autofluoreszenz) in Echtzeit zu detektieren. Darüber hinaus bietet die automatische Anpassung z.B. einer Dynodenspannung einen sehr großen Verstärkungsbereich, so dass Fluoreszenzsignale in einem sehr weiten Intensitätsbereich bzw. starke Intensitätsschwankungen gemessen werden können.

Gegenüber den Methoden der zeitaufgelösten Fluoreszenzspektroskopie (z.B. TCSPC) kommt das hier betrachtete Verfahren mit einem sehr viel geringeren technischen Aufwand aus. Mit einer geeigneten Lichtquelle kann die Vorrichtung der vorliegenden Erfindung sehr stark miniaturisiert und als mobile Analysevorrichtung entwickelt werden.

Ein Vorteil der vorliegenden Erfindung ist, dass mit dem Verfahren und mit der Vorrichtung optische Signale der Autofluoreszenz oder einer der Autofluoreszenz in ihrer Intensität entsprechenden Fluoreszenz der im Bereich der Anregungswellenlänge absorbierenden Stoffe erzeugt und erfasst werden können. Dadurch kann die Analyse von chemischen Stoffzuständen bzw. von chemischen und physikalischen Prozessen aufgrund der Fluoreszenz einzelner Stoffbestandteile ohne die Nachteile des Standes der Technik durchgeführt werden.

Ein weiterer Vorteil der vorliegenden Erfindung ist, dass die optischen Parameter des Anregungsimpulses in Abhängigkeit von dem Stoff eingestellt werden, derart, dass im bestrahlten Volumen absorbierende Moleküle des Stoffes mit sehr großer Wahrscheinlichkeit einmal angeregt werden. Durch dieses Merkmal ist es möglich, sehr genaue Signale zur Analyse eines Stoffes zu erhalten.

Ein weiterer Vorteil der vorliegenden Erfindung ist, dass die Einrichtung zum Empfang eines optischen Messignals einen Wandler zur Umwandlung des empfangenen optischen Messignals in ein elektrisches Signal umfasst und dass dieser das optische Messsignal in ein zeitlich gedehntes elektrisches Signal mit einer Länge von wenigstens der Länge des optischen Anregungsimpulses umwandelt. Die Umwandlung des optischen Messsignals in ein zeitlich gedehntes elektrisches Signal und die Verarbeitung desselben trägt zur Verbesserung der Analyse des zu untersuchenden Stoffes bei.

Weitere Vorteile der vorliegenden Erfindung ergeben sich aus den weiteren Merkmalen der Unter- und Nebenansprüche.

Eine Ausführungsform der vorliegenden Erfindung wird im Folgenden anhand der Zeichnungen näher beschrieben. Die einzige Figur zeigt eine schematische Darstellung der erfindungsgemäßen Vorrichtung.

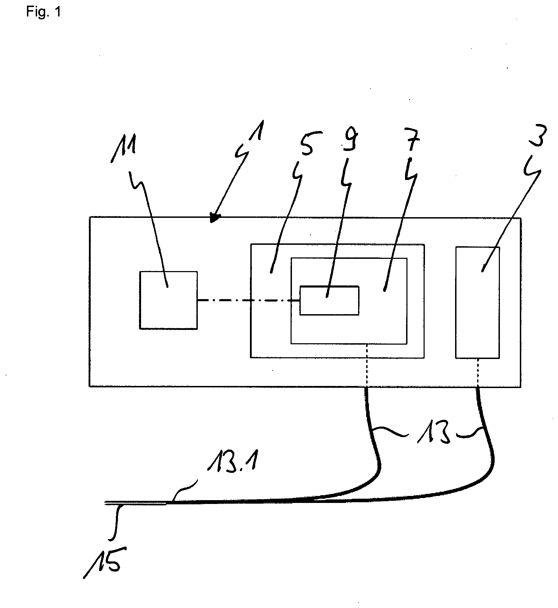

In Fig. 1 ist schematisch eine Vorrichtung 1 zur Erfassung einer optischen Strahlung, die im vorliegenden Ausführungsbeispiel als Autofluoreszenz oder einer der Autofluoreszenz in ihrer Intensität entsprechenden Fluoreszenz eines im Bereich einer Anregungswellenlänge absorbierenden Stoffes beschrieben wird, aber auch eine andere optische Strahlung betreffen kann. Diese Vorrichtung 1 umfasst eine Einrichtung 3 zur Erzeugung eines optischen Anregungsimpulses und eine Einrichtung 5 zum Empfang eines optischen Messignals von dem im Bereich des Anregungsimpulses absorbierenden Stoffes.

Die Einrichtung 3 ist ein Kurzpulslaser. Mit diesem wird erreicht, dass der Anregungsimpuls ausschließlich in einem Zeitraum mit dem zu untersuchenden Material wechselwirkt, der je nach Anwendung zwischen einigen wenigen und weniger als einer Nanosekunde betragen kann. Dadurch werden alle im bestrahlten Volumen absorbierenden Moleküle mit sehr großer Wahrscheinlichkeit nur einmal angeregt und fluoreszieren dementsprechend auch nur maximal einmal. Da die Fluoreszenz unmittelbar nach der Anregung erfolgt, entsteht ein Fluoreszenzsignal, dessen zeitlicher Verlauf, in Abhängigkeit von der Fluoreszenzlebensdauer der entsprechenden Moleküle, nur wenige Nanometer lang ist. Das Signal setzt sich aus einer Überlagerung der Autofluoreszenz aller fluoreszierenden Moleküle in dem angeregten Volumen zusammen.

Die z.B. durch Autofluoreszenz erzeugten optischen Signale weisen generell eine sehr geringe Intensität auf. Die Vorrichtung 1 umfasst Einrichtung 5 zum Empfang eines optischen Messignals von dem im Bereich des Anregungsimpulses bzw. der Anregungswellenlänge absorbierenden Stoffes und einen Wandler 7, der ein solches empfangenes optisches Signal in ein elektrisches Signal umwandelt und das elektrische Signal verarbeitet. Zu diesem Zweck umfasst der Wandler 7 ein verstärkendes Photoelement, z.B. einen Photomultiplier. Ein auf die Photokathode des Photomultipliers auftreffender Lichtimpuls erzeugt freie Elektronen, die durch hochspannungsgekoppelte Dynoden vervielfacht werden. Am Ausgang des Photomultipliers steht dadurch ein verstärkter, der Energie des Lichtimpulses proportionaler, negativer, nadelförmiger Spannungsimpuls für die weitere Signalverarbeitung zur Verfügung. Durch ein automatisches Anpassen der Dynodenspannung sind Fluoreszenzsignale in einem sehr weiten Intensitätsbereich auswertbar.

Der Wandler 7 umfasst auch einen Impulsverstärker 9. Der Impulsverstärker 9 bereitet das elektrische Ausgangssignal z.B. des Photomultipliers zur Analyse auf. Der Impulsverstärker 9 ist 3-stufig aufgebaut. Die erste Stufe invertiert das nadelförmige Ausgangssignal des Photomultipliers. In den beiden folgenden Stufen wird das elektrische Signal durch eine elektronische Schaltung (nicht dargestellt) verstärkt und verarbeitet. Durch die Verarbeitung wird das elektrische Signal von dem Wandler 7 in ein zeitlich gedehntes Signal gewandelt. Um eine möglichst geringe Veränderung der Fluoreszenzimpulsform innerhalb des Signalweges durch Leitungsinduktivitäten und Leitungskapazitäten zu erreichen, wird der Impulsverstärker 9 direkt auf dem Photomultiplier positioniert.

Die Vorrichtung 1 umfasst auch einen Mikrocontroller 11, der in einem zeitlichen konstanten Abstand nach Aufnahme des optischen Signals der Autofluoreszenz oder entsprechenden Fluoreszenz geringer Intensität den Analogwert des Impulsverstärkers 9 abgreift. Dazu erzeugt eine separate Schaltung (nicht dargestellt) einen elektrischen Impuls (Read-Impuls), der einen Interrupt auslöst. In der dazugehörigen Interrupt-Service-Routine (ISR) wird der am Impulsverstärker 9 anliegende Analogwert vom Mikrokontroller 11 abgerufen und digitalisiert.

Die Einrichtung 5 zum Empfang eines optischen Messignals von dem im Bereich der Anregungswellenlänge absorbierenden Stoffes weist eine Lichtwellenleiter - sonde 13 auf, die an einem Ende 13.1 eine Ferrule 15 aufweist.

Durch die Verwendung von Lichtwellenleitern (z.B. Glasfasersonden) in Verbindung mit der Ferrule 15 kann das Verfahren sehr flexibel eingesetzt werden. Solche Lichtwellenleiter können z.B. folgende Ausbildung haben:
- Stabsonden, Sonden mit einem länglichen, stabförmigen Sondenkopf (Ferrule) zur Messung in flüssigen Medien in einem Probengefäß;
- Nadelsonden, Sonden mit einer sehr feinen Spitze zur Einführung in biologisches Gewebe und dortigen Messung;
- Horizontalsonden, Sonden mit speziellem Sondenkopf, in dem der Lichtweg um 90° abgelenkt wird; diese Sonden eignen sich zur flachen Auflage auf ein Gewebe (z.B. Haut) und Messung an der Gewebeoberfläche.

Die digitalisierten Spannungswerte werden mittels eines Kalibrier-Algorithmus auf die Werte der Strahlungsenergie der Autofluoreszenz oder entsprechenden Fluoreszenz geringer Intensität proportionalisiert, normiert und auf eine Skala von 0 bis 10⁶ skaliert. Anschließend können sie als RFU (relative fluorescence unit) gespeichert und auf einem Display angezeigt werden.

### Bezugszeichenliste

- 1: Vorrichtung
- 3: Einrichtung zur Erzeugung eines Anregungsimpulses
- 5: Einrichtung zum Empfang eines optischen Messignals
- 7: Wandler
- 9: Impulsverstärker
- 11: Microcontroller
- 13: Lichtwellenleitersonde
- 13.1: Ende
- 15: Ferrule

## Patentansprüche

1. Verfahren zur Erfassung einer optischen Fluoreszenzstrahlung, die von einem zu untersuchenden Objekt als optisches Messsignal mit einer Intensität abgestrahlt wird, die einer Autofluoreszenz des Objekts entspricht, wobei ein optischer Anregungsimpuls durch einen Kurzpulslaser erzeugt wird und das optische Messsignal in ein elektrisches Signal umgewandelt und elektrisch verarbeitet wird,
**dadurch gekennzeichnet,**
**dass** das elektrische Signal im Schritt des elektrischen Verarbeitens zeitlich gedehnt wird.

2. Verfahren nach Anspruch 1,
**dadurch gekennzeichnet,**
**dass** ein Parameter des optischen Anregungsimpulses in Abhängigkeit von dem Stoff eingestellt wird, derart, dass den optischen Anregungsimpuls absorbierende Moleküle im bestrahlten Volumen des Objekts einmal angeregt werden.

3. Verfahren nach Anspruch 1 oder 2,
**dadurch gekennzeichnet,**
**dass** durch die Überlagerung eines optischen Messsignals aller angeregten Moleküle des Stoffes in dem bestrahlten Volumen ein Messsignal erzeugt wird, das erfasst werden kann.

4. Verfahren nach einem der vorstehenden Ansprüche,
**dadurch gekennzeichnet,**
**dass** mit dem Kurzpulslaser ein optischer Anregungsimpuls erzeugt wird, der mit dem absorbierenden Stoff in einem Zeitraum von 0,1 bis 1,5 Nanosekunden wechselwirkt.

5. Vorrichtung (1) zur Erfassung einer optischen Fluoreszenzstrahlung, die von einem zu untersuchenden Objekt als optisches Messsignal mit einer Intensität abgestrahlt wird, die einer Autofluoreszenz des Objekts entspricht, mit einem Kurzpulslaser (3), der einen optischen Anregungsimpuls erzeugt, mit einer Einrichtung (5) zum Empfang eines optischen Messsignals und mit einem Mikrocontroller, wobei die Einnchtung (5) zum Empfang des optischen Messignals einen Wandler (7) umfassend einen Signalverstärker (9) zur Um-wandlung des empfangenen optischen Messignals in ein elektrisches Signal umfasst,
**dadurch gekennzeichnet,**
**dass** der Wandler (7) das aus dem optischen Messsignal erzeugte elektrische Signal zeitlich dehnt und der Mikrocontroller (11) das im Signalverstärker (9) verstärkte elektrische und zeitlich gedehnte Signal in einem zeitlich konstanten Abstand nach dem Empfang des optischen Messignals abgreift.

6. Vorrichtung nach Anspruch 5,
**dadurch gekennzeichnet,**
**dass** der Wandler (7) derart ausgebildet ist, dass dieser das optische Signal in ein elektrisches Signal mit einer Länge von wenigstens der Länge des optischen Anregungsimpulses umwandelt.

7. Vorrichtung nach einem der Ansprüche 5 oder 6
**dadurch gekennzeichnet,**
**dass** die Einrichtung (5) zum Empfang eines optischen Messignals von dem im Bereich der Parameter des optischen Anregungsimpulses absorbierenden Stoffes eine Lichtwellenleitersonde (13) umfasst, die an einem Ende (13.1) eine Ferrule (15) aufweist.

## Claims

1. A method for detecting optical fluorescence radiation irradiated by an object to be analyzed as an optical measurement signal with an intensity that corresponds to an autofluorescence of the object, wherein an optical excitation pulse is generated by a short-pulse laser and the optical measurement signal is converted into an electrical signal and electrically processed,
**characterized in that**
the electrical signal is temporally stretched in the step of electrical processing.

2. The method according to claim 1,
**characterized in that**
a parameter of the optical excitation pulse is set as a function of the substance in such a manner that molecules absorbing the optical excitation pulse are excited once in the irradiated volume of the object.

3. The method according to claim 1 or 2,
**characterized in that**
a detectable measurement signal is generated by superimposing an optical measurement signal of all excited molecules of the substance in the irradiated volume.

4. The method according to one of the preceding claims,
**characterized in that**
an optical excitation pulse that interacts with the absorbing substance in a period of time of 0.1 to 1.5 nanoseconds is generated with the short-pulse laser.

5. An apparatus (1) for detecting an optical fluorescence radiation irradiated by an object to be analyzed as an optical measurement signal with an intensity that corresponds to an autofluorescence of the object, with a short-pulse laser (3) which generates an optical excitation pulse, with a device (5) for receiving an optical measurement signal and with a microcontroller, wherein the device (5) for receiving an optical measurement signal comprises a transducer (7), comprising a signal amplifier (9), for converting the received optical measurement signal into an electrical signal,
**characterized in that**
the transducer (7) temporally stretches the electrical signal generated from the optical measurement signal and the microcontroller (11) picks up the electrical and temporally stretched signal that has been amplified in the signal amplifier (9) at a temporally constant distance after the reception of the optical measurement signal.

6. The device according to claim 5,
**characterized in that**
the transducer (7) is configured in such a manner that it converts the optical signal into an electrical signal with a length of at least the length of the optical excitation pulse.

7. The device according to one of claims 5 or 6,
**characterized in that**
the device (5) for receiving an optical measurement signal from the substance absorbing in the range of the parameters of the optical excitation pulse comprises an optical waveguide probe (13) that has a ferrule (15) at one end (13.1).

## Revendications

1. Procédé de saisie d'un rayonnement de fluorescence optique, qui est émis par un objet à analyser en tant que signal de mesure optique avec une intensité, qui correspond à une autofluorescence de l'objet, sachant qu'une impulsion d'excitation optique est produite par un laser à impulsions courtes et le signal de mesure optique est converti en un signal électrique et est électriquement traité,
**caractérisé en ce que**
le signal électrique est allongé dans le temps dans la phase du traitement électrique.

2. Procédé selon la revendication 1,
**caractérisé en ce qu'**
un paramètre de l'impulsion d'excitation optique est établi en fonction de la substance de telle manière que des molécules absorbant l'impulsion d'excitation optique sont excitées une fois dans le volume irradié de l'objet.

3. Procédé selon la revendication 1 ou 2,
**caractérisée en ce qu'**
un signal de mesure pouvant être saisi, est produit dans le volume irradié, par la superposition d'un signal de mesure optique de toutes les molécules excitées de la substance.

4. Procédé selon l'une quelconque des revendications précédentes,
**caractérisé en ce qu'**
une impulsion d'excitation optique est produite avec le laser à impulsions courtes, laquelle interagit avec la substance absorbante dans une période de temps de 0,1 à 1,5 nanosecondes.

5. Dispositif (1) pour la saisie d'un rayonnement de fluorescence optique, qui est émis par un objet à analyser sous la forme de signal de mesure optique avec une intensité, qui correspond à une autofluorescence de l'objet, avec un laser à impulsions courtes (3), qui produit une impulsion d'excitation optique, avec un équipement (5) pour la réception d'un signal de mesure optique et avec un microcontrôleur, sachant que l'équipement (5) pour la réception du signal de mesure optique comprend un transducteur (7) comprenant un amplificateur de signal (9) pour la conversion du signal de mesure optique reçu en un signal électrique,
**caractérisé en ce que**
le transducteur (7) allonge dans le temps le signal électrique produit à partir du signal de mesure optique et le microcontrôleur (11) prélève le signal amplifié dans l'amplificateur de signal (9) et allongé dans le temps dans un intervalle constant dans le temps après la réception du signal de mesure optique.

6. Dispositif selon la revendication 5,
**caractérisé en ce que**
le transducteur (7) est constitué de telle manière que celui-ci convertit le signal optique en un signal électrique avec une longueur d'au moins la longueur de l'impulsion d'excitation optique.

7. Procédé selon l'une quelconque des revendications 5 ou 6,
**caractérisé en ce que**
l'équipement (5) de réception d'un signal de mesure optique de la substance absorbante dans la gamme des paramètres de l'impulsion d'excitation optique, comprend une sonde à fibres optiques (13), qui comporte une ferrule (15) à une extrémité (13.1).
